# EUROPEAN PATENT APPLICATION

(11) **EP 4 283 509 A1**
(43) Date of publication of application: **29.11.2023**
(21) Application number: 22315111.9
(22) Date of filing: 23.05.2022
(51) Int. Cl.: G06F 21/86, G06F 21/57, B65D 55/02, H05K 5/06

(54) **METHOD FOR MANUFACTURING TAMPER-PROOF IOT DEVICE**

(71) Applicant: Terabee S.A.S., 01630 Saint-Genis Pouilly (FR)
(72) Inventor: Ruffo, Massimilliano, 1224 Chêne-Bougerie (CH); Kovermann, Jan W., 01630 Saint-Genis-Pouilly (FR)
(74) Representative: Weihs, Bruno Konrad

(57) **Abstract**

A method for manufacturing a tamper-proof Internet of Things (IoT) device. The method comprises providing an IoT device with an enclosure which is configured to define a fully hermetically sealed volume, whereby the enclosure comprises electronics of the IoT device; equipping inside the enclosure the electronics of the IoT device with at least one sensor for volatile substances; adding inside of the enclosure of the IoT device a determined amount of a determined volatile substance detectable by the at least one sensor for volatile substances previously to sealing the enclosure; sealing the enclosure; and reading out the at least one sensor for volatile substances for a level of the determined volatile substance in the enclosure and saving the read-out sensor measurement value as reference.

## Description

### Technical field

The present invention is in the field of Internet of Things (IoT) devices. It more specifically relates to a method for manufacturing a tamper-proof IoT device and a method for detecting tampering in such an IoT device.

### Background

In the expression Internet of Thing (IoT), the Internet may be described as a network for transmitting data and the things are the IoT devices which are connected to this network.

IoT devices are devices which may connect to a larger, internet-connected device. IoT device examples are sensors of all types, cameras, microphones, and RFID transmitters. These devices collect data and send it to a data processing unit that either uses the data or forwards it to a remote device for processing.

It is known to realize an IoT device to include an enclosure that defines a fully hermetically sealed volume, i.e., a gas tight volume, and to install electronics of the IoT device inside the hermetically sealed enclosure. This is common particularly when the IoT device requires a high Ingress Protection (IP) rating for outdoor operation.

The electronics of the IoT device may include a microprocessor, a memory device, a power source for the microprocessor, a control for a radio circuit that enable the IoT device to connect and communicate of the Internet. The electronics of the IoT device are required to implement functionalities of the IoT device, such as for example readout of sensor measurements and navigation of the IoT device.

As IoT devices are often used in unattended places they may be subject to burglary and tampering attempts by unauthorized persons who wish to access and manipulate the IoT electronics. This could lead to damage and cause dysfunction of the IoT device, and to manipulation of measured data and/or communication over the Internet.

The present invention seeks to find a solution to prevent and detect tampering attempts, in order for example to be able to engage appropriate countermeasures in the IoT device.

### Summary of the invention

In a first aspect, the invention provides a method for manufacturing a tamper-proof Internet of Things (IoT) device. The method comprises providing an IoT device with an enclosure which is configured to define a fully hermetically sealed volume, whereby the enclosure comprises electronics of the IoT device; equipping inside the enclosure the electronics of the IoT device with at least one sensor for volatile substances; adding inside of the enclosure of the IoT device a determined amount of a determined volatile substance detectable by the at least one sensor for volatile substances previously to sealing the enclosure; sealing the enclosure; and reading out the at least one sensor for volatile substances for a level of the determined volatile substance in the enclosure and saving the read-out sensor measurement value as reference.

In a preferred embodiment, the at least one sensor for volatile substances is a sensor for Volatile Organic Compounds (VOCs).

In a preferred embodiment, the volatile substance is a volatile organic compound taken from a list comprising ethanol, isopropanol and formaldehyde.

In a preferred embodiment, the at least one sensor for volatile substance is a sensor for C02 gas.

In a preferred embodiment, the volatile substance is CO2 gas.

In a preferred embodiment, the determined amount of the volatile substance is adjusted such that a vapor pressure generated in the enclosure remains in a detection range of the at least one sensor for volatile substances in all ambient conditions in which the IoT device is intended to operate.

In a preferred embodiment, the determined amount of a determined volatile substance is calculated using a volume of the sealed enclosure, and is further configured such that a decrease or increase in a concentration of the determined volatile substance inside the enclosure is in a detection sensitivity range of the at least one sensor for volatile substances.

In a preferred embodiment, the method further comprises equipping the IoT device in a first through feed of the enclosure with at least one external sensor; and connecting the at least one external sensor to the electronics.

In a preferred embodiment, the method further comprises equipping the IoT device in a second through feed of the enclosure with at least one external connection for power and data; and connecting the at least one external connection for power and data to the electronics.

In a second aspect, the invention provides a method for detecting tampering of a tamper-proof Internet of Things (IoT) device as manufactured in any one of the methods for manufacturing described herein above. The method comprises measuring and monitoring an ambient pressure and an ambient temperature surrounding the IoT device, and the at least one sensor for volatile substances for a level of the determined volatile substance in the enclosure at the IoT device, the monitoring comprising computing values of a desired level of the determined volatile substance as a function of the reference measurement value and ambient pressure and ambient temperature, and detecting a deviation between the values of the desired level of the determined substance and the measured level of the determined substance in the enclosure at the IoT device, comparing the detected deviation with a predetermined alarm value throughout the monitoring, and triggering an alarm in case the detected deviation exceeds the predetermined alarm value.

In a preferred embodiment, the step of triggering an alarm also triggers a destruction or erasing of confidential information stored inside the electronics of the IoT device, the confidential being any one of the list comprising at least a cryptographic key, a password, and a confidential code.

### Brief description of the figures

The invention will be better understood through the detailed description of preferred embodiments of the invention, and in reference to the drawings, wherein
figure 1 is a schematic illustration of a tamper-proof IoT device according to an example embodiment of the invention;
figure 2 is a flowchart illustrating a method for manufacturing the tamper-proof IoT device according to an example embodiment of the invention; and
figure 3 is a flowchart illustrating a method for detecting tampering of a tamper-proof Internet of Things (IoT) device according to an example embodiment of the invention.

Same references will be used to reference same or similar features throughout the figures.

### Detailed description of preferred embodiments of the invention

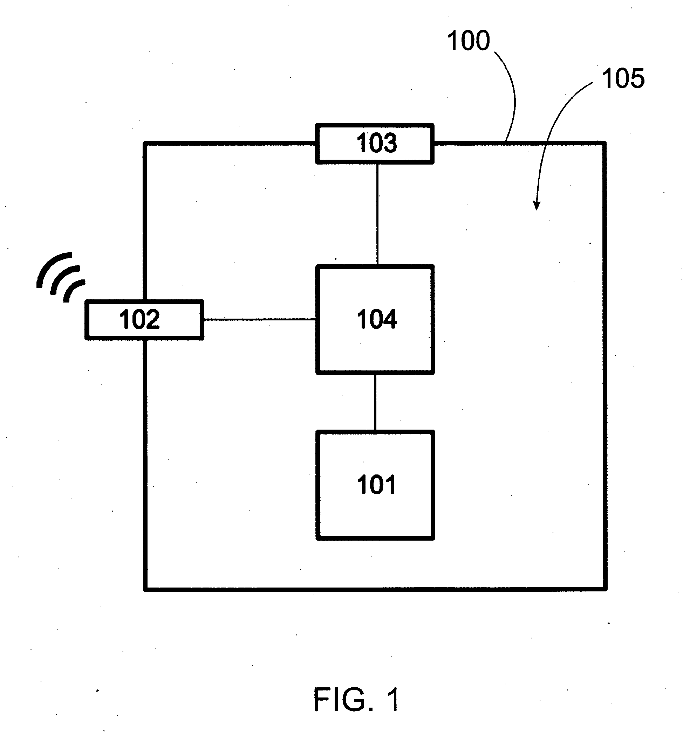

Referring to **figure 1****,** this contains a schematic illustration of an example embodiment of a tamper-proof IoT device comprising an enclosure **100** which is configured to define a fully hermetically sealed volume. The enclosure **100** contains in its volume a determined amount of a determined volatile substance **105.** The reference **105** in **figure 1** references the inside of the enclosure **100** where the volatile substance **105** is found. The tamper-proof IoT device further comprises inside of the enclosure **100** at least one sensor for volatile substances **101** and electronics **104** of the IoT device, including at least an internal IoT data node with processing and communication modules (not illustrated individually), which are connected to each other. The IoT device further comprises an external connection for power and data **102,** e.g., a USB connector, a DC power connection, which is configured as a sealed feed through the enclosure **100.** At least one external sensor **103** is also configured as a sealed feed through the enclosure **100.** Both of the external connection for power and data **102** and the at least one external sensor **103** are connected to the electronics **104** of the IoT device. This allows to exchange power and information signals in the usual manner.

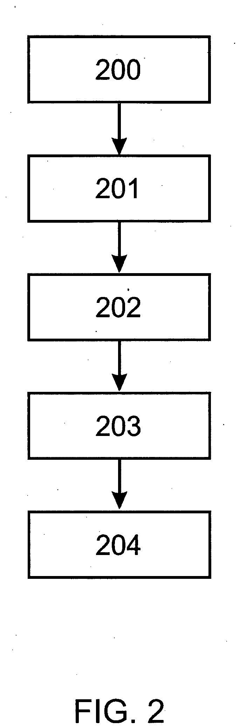

In one aspect the invention provides a method for manufacturing the tamper-proof IoT device. **Figure 2** contains a flowchart illustrating a preferred embodiment for realizing this method. A first step **200** is a providing of an IoT device with the enclosure which is configured to define the fully hermetically sealed volume, whereby the enclosure comprises the electronics of the IoT device. In a step **201** the method equips inside the enclosure the electronics of the IoT device with at least one sensor for volatile substances. A step **202** then adds inside the enclosure of the IoT device a determined amount of the determined volatile substance detectable by the at least one sensor for volatile substances previously to sealing the enclosure. In step **203** the enclosure is sealed. In order to round up the manufacturing the method provides a step **204** of reading out the at least one sensor for volatile substances for a level of the determined volatile substance in the enclosure and saving the read-out sensor measurement value as reference.

The at least one sensor for volatile substances may be configured to detect a specific volatile substance.

In a preferred embodiment the at least one sensor for volatile substances is a sensor for Volatile Organic Compounds (VOCs). The volatile organic compound may for example be any one taken from a list comprising ethanol, isopropanol and formaldehyde.

In a preferred embodiment the at least one sensor for volatile substance is a sensor for C02 gas. The volatile substance to be detected is then CO2 gas.

In a further preferred embodiment of the method for manufacturing the determined amount of the volatile substance is adjusted such that a vapor pressure generated in the enclosure remains in a detection range of the at least one sensor for volatile substances in all ambient conditions in which the IoT device is intended to operate.

The determined amount of a determined volatile substance may be calculated using a volume of the sealed enclosure, and is further configured such that a decrease or increase in a concentration of the determined volatile substance inside the enclosure is in a detection sensitivity range of the at least one sensor for volatile substances.

In a further preferred embodiment, the method further comprises equipping the IoT device in a first through feed of the enclosure with the at least one external sensor, and connecting the at least one external sensor to the electronics. This enables to measure for example ambient pressure and temperature around the IoT device.

In a further preferred embodiment, the method further comprises equipping the IoT device in a second through feed of the enclosure with the at least one external connection for power and data, and connecting the at least one external connection for power and data to the electronics.

In a further aspect, the invention provides a method for detecting tampering of a tamper-proof Internet of Things device as manufactured in the methods described herein above.

In a preferred embodiment, the enclosure may be manufactured to contain a mixture of volatile substances. In this case a plurality of sensors for volatile substances may be provided inside the enclosure, with different volatile substances being detected depending on properties of a single sensor.

In a further preferred embodiment, it is possible to have inside the enclosure a volatile substance that is configured to progressively diffuse into material of the enclosure. It therefore has a declining concentration over time that can be tracked and compared to a known model, as a function of pressure and temperature.

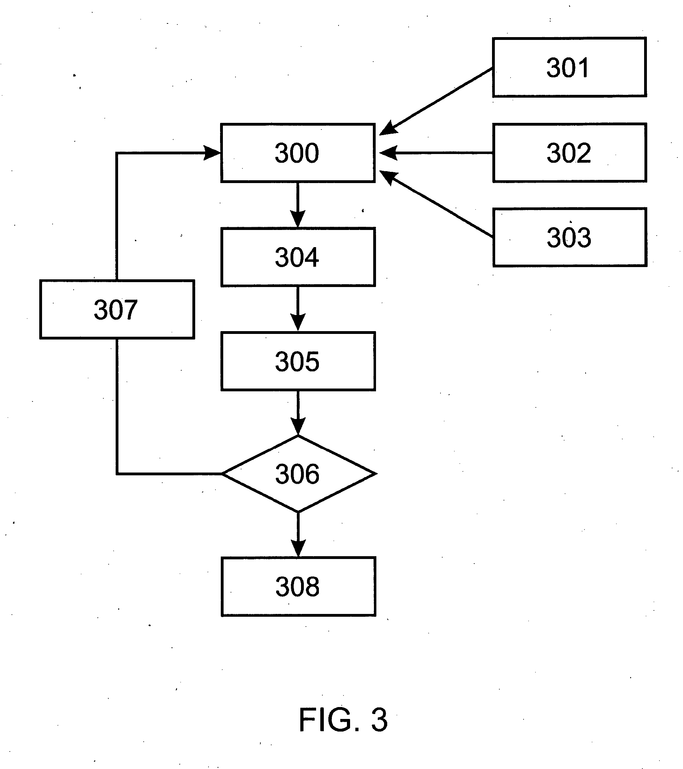

**Figure 3** contains a flowchart illustrating a preferred embodiment for realizing this method for detecting tampering of a tamper-proof Internet of Things device. The method comprises measuring and monitoring **300** an ambient pressure **301** and an ambient temperature **302** surrounding the IoT device, and the at least one sensor for volatile substances for a level of the determined volatile substance **303** in the enclosure at the IoT device. The monitoring **300** comprises computing values **304 of** a desired level of the determined volatile substance as a function of the reference measurement value and ambient pressure and ambient temperature, and detecting a deviation **305** between the values of the desired level of the determined substance and the measured level of the determined substance in the enclosure at the IoT device. Throughout the monitoring the detected deviation is compared **306, 307** to a predetermined alarm value. In case the deviation exceeds a predetermined alarm value an alarm is triggered **308.**

In a preferred embodiment the step of triggering an alarm also triggers a destruction or erasing of confidential information stored inside the electronics of the IoT device, the confidential being any one of the list comprising at least a cryptographic key, a password, and a confidential code.

In a preferred embodiment, The VOC (Volatile Organic Compound) may be formaldehyde. The at least one sensor for volatile substance may be s state of the art sensor that is configured to detect 0-1000 ppb of formaldehyde in air. One would therefore choose to put an amount of formaldehyde into the enclosure to achieve a concentration between 500 ppb and 750 ppb. This value is chosen above the center value as a decrease of concentration is more likely due to leakage than an increase. An increase could only arise due to pressure and temperature changes.

## Claims

1. A method for manufacturing a tamper-proof Internet of Things (IoT) device, comprising
providing (200) an IoT device with an enclosure (100) which is configured to define a fully hermetically sealed volume, whereby the enclosure comprises electronics (104) of the IoT device;
equipping (201) inside the enclosure the electronics of the IoT device with at least one sensor for volatile substances (101);
adding (202) inside of the enclosure of the IoT device a determined amount of a determined volatile substance (105) detectable by the at least one sensor for volatile substances previously to sealing the enclosure;
sealing (203) the enclosure; and
reading (204) out the at least one sensor for volatile substances (101) for a level of the determined volatile substance (105) in the enclosure and saving the read-out sensor measurement value as reference.

2. The method of claim 1, wherein
the at least one sensor for volatile substances is a sensor for Volatile Organic
Compounds (VOCs).

3. The method for manufacturing of claim 2, wherein
the volatile substance is a volatile organic compound taken from a list comprising
ethanol, isopropanol and formaldehyde.

4. The method of claim 1, wherein
the at least one sensor for volatile substance is a sensor for C02 gas.

5. The method of claim 4, wherein
the volatile substance is CO2 gas.

6. The method of claim 1, wherein
the determined amount of the volatile substance is adjusted such that a vapor pressure
generated in the enclosure remains in a detection range of the at least one sensor for volatile substances in all ambient conditions in which the IoT device is intended to operate.

7. The method of any one of claims 1 to 5, wherein the determined amount of a determined volatile substance is calculated using a volume of the sealed enclosure, and is further configured such that a decrease or increase in a concentration of the determined volatile substance inside the enclosure is in a detection sensitivity range of the at least one sensor for volatile substances.

8. The method of any one of claims 1 to 7, further comprising
equipping the IoT device in a first through feed of the enclosure with at least one external sensor (103); and
connecting the at least one external sensor to the electronics.

9. The method of any one of claims 1 to 8, further comprising
equipping the IoT device in a second through feed of the enclosure with at least one external connection for power and data (102); and
connecting the at least one external connection for power and data to the electronics.

10. A method for detecting tampering of a tamper-proof Internet of Things (IoT) device as manufactured in any one of the methods for manufacturing described in the claims 1 to 7, comprising
measuring and monitoring (300) an ambient pressure (301) and an ambient temperature (303) surrounding the IoT device, and the at least one sensor for volatile substances for a level of the determined volatile substance (303) in the enclosure at the IoT device;
the monitoring comprising computing (304) values of a desired level of the determined volatile substance as a function of the reference measurement value and ambient pressure and ambient temperature, and detecting (305) a deviation between the values of the desired level of the determined substance and the measured level of the determined substance in the enclosure at the IoT device;
comparing (306, 307) the detected deviation with a predetermined alarm value throughout the monitoring; and
triggering (308) an alarm in case the detected deviation exceeds the predetermined alarm value.

11. The method for detecting tampering of claim 10, wherein
the step of triggering an alarm also triggers a destruction or erasing of confidential information stored inside the electronics of the loT device, the confidential being any one of the list comprising at least a cryptographic key, a password, and a confidential code.
